# EUROPÄISCHE PATENTSCHRIFT

(11) **EP 3 602 669 B1**
(45) Veröffentlichungstag und Bekanntmachung des Hinweises auf die Patenterteilung: **07.02.2024**
(21) Anmeldenummer: 18719061.6
(22) Anmeldetag: 29.03.2018
(51) Int. Cl.: H01M 8/0612, H01M 8/04014, H01M 8/04007, H01M 8/12, H01M 8/124, H01M 8/2425, H01M 8/2475, H01M 8/2484

(54) **BEHÄLTNIS ZUM BETRIEB VON HOCHTEMPERATURBRENNSTOFFZELLEN**
CONTAINER FOR OPERATING HIGH-TEMPERATURE FUEL CELLS
RÉCIPIENT SERVANT À FAIRE FONCTIONNER DES PILES À COMBUSTIBLE À HAUTE TEMPÉRATURE

(30) Priorität: 31.03.2017 DE 102017107003
(43) Veröffentlichungstag der Anmeldung: 05.02.2020
(73) Patentinhaber: T-Cell AG, 10711 Berlin (DE)
(72) Erfinder: BERG, Heinz Peter, 03054 Cottbus (DE)
(74) Vertreter: Braeuning Schubert Patentanwälte GbR
(86) Internationale Anmeldenummer: PCT/EP2018/058068
(87) Internationale Veröffentlichungsnummer: WO 2018/178232

(56) Entgegenhaltungen:
- EP-A2- 2 057 708
- US-A1- 2016 133 955
- US-B1- 6 485 852
- Prof. Dr. Ing. H.P. Berg, Dipl.-Ing C. Krienke: "Mikrogasturbinen-SOFC-Prozesse mit hohem Wirkungsgradpotential", , 1. Oktober 2015 (2015-10-01), XP002781838, 12. Magdeburger Maschinenbau-Tage 30.09. und 01.10.2015 Gefunden im Internet: URL:https://www.researchgate.net/publicati on/282567437 [gefunden am 2018-06-07]
- H.P. Berg, U. Malenky, O. Antoshkiv, R. Mattke: "Kompakte Hocheffektieve Mikrogasturbine mit intergriertem Generator (MTIG): Einen Komponente für die seriellen hybriden Antriebssysteme der Elektroflugzeuge von morgen", Deutscher Luft- und Raumfahrtkongress 2015 , 2015, Seiten 1-9, XP002781839, Gefunden im Internet: URL:https://www.researchgate.net/publicati on/282332456 [gefunden am 2018-06-07]

## Beschreibung

Die vorliegende Erfindung betrifft ein Behältnis zur Aufnahme und zum Betrieb von Hochtemperaturbrennstoffzellen.

Im Stand der Technik sind hybride Kombinationen von Hochtemperaturbrennstoffzellen mit Gasturbinen bekannt. Hierbei werden die einzelnen Komponenten, wie z. Bsp. Turbinenteile, Wärmetauscher, Nachbrennkammer oder Druckbehälter, stets mit Rohrleitungen verbunden. Diese müssen isoliert werden, um den Wärmeverlust zu minimieren. Eine besonders hohe Anforderung wird hierbei an den Druckbehälter, in dem sich die Hochtemperaturbrennstoffzellen befinden, gestellt. Dieser Behälter muss dem hohen Betriebsdruck bei hohen Betriebstemperaturen von 650°C - 1100°C standhalten können und den gesetzlich gültigen Behälterrichtlinien genügen. Dasselbe gilt für die verbindenden Rohrleitungen.

Die US 6,485,852 B1 beschreibt ein kompaktes integriertes Wärmemanagement- und Brennstoffreformierungssystem und -verfahren, umfassend eine wärmeisolierte Wand, die eine Umhüllung mit einem inneren Kammergehäuse bildet, einen Festoxid-Brennstoffzellenstapel und einen Mischbetrieb-Wärmetauscher. Ein Rekuperator mit Innenwänden, die farblich abgestuft sind, um Temperaturzonen zu schaffen, die einen positiven Temperaturgradienten in Richtung des Festoxid-Brennstoffzellenstapels bewirken, ist innerhalb der Kammer angeordnet und eng mit dem Brennstoffzellenstapel gekoppelt, um dessen Strahlung zu absorbieren. Der Rekuperator heizt das teilweise vorgewärmte Oxidationsmittelgas weiter auf und reformiert das einströmende Brenngas teilweise oder vollständig. Verteiler mit Oxidationsmittel- und Brennstoffkanälen zum Leiten des reformierten Brennstoffs und des erhitzten Oxidationsmittels vom Rekuperator zu den Oxidationsmittel- und Brennstoffeinlässen der Brennstoffzelle sind so angeordnet, dass der Brennstofffluss in den an den Rekuperator angrenzenden Bereichen jeder Brennstoffzelle und der Oxidationsmittelfluss in der Nähe der zentralen Bereiche jeder Brennstoffzelle maximiert wird. Ein Verfahren zur Bereitstellung eines maßgeschneiderten Anodenbrennstoffstroms ist ebenfalls vorgesehen.

Berg, H. P.; Malenky, U.; Antoshkiv, O.; Mattke, R. offenbaren eine "Kompakte hocheffektive Mikrogasturbine mit integriertem Generator (MTiG) - Eine Komponente für die seriellen hybriden Antriebssyteme der Elektroflugzeuge von morgen" (Deutscher Luft- und Raumfahrtkongress 2015; DocumentlD: 370070). urn:nbn:de:101:1-20151109556

In der EP 2 057 708 B1 werden eine integrierte Festoxid-Brennstoffzelle und ein Brennstoffprozessor offenbart. Die Brennstoffzellen-Einheit umfasst eine Mehrzahl an zueinander winkeligen Brennstoffzellen-Stacks, die in einer ringförmigen Struktur angeordnet sind, um eine zentrale Achse zu bilden, wobei jeder der Brennstoffzellen-Stacks eine Stapelrichtung aufweist, die sich parallel zu der zentralen Achse erstreckt. Eine ringförmige Kathodenzufuhrleitung umgibt die Brennstoffzellen-Stacks, um einen Kathodenzufuhrstrom dorthin zu liefern und die Brennstoffzellen-Stacks wiederum umgeben eine ringförmige Kathodenabgasleitung, um einen Kathodenabgasstrom davon aufzunehmen. Zudem ist offenbart, dass die Brennstoffzellen-Einheit einen ringförmigen Kathodenrekuperator-Wärmetauscher, der von den Brennstoffzellen-Stacks radial nach außen positioniert ist, um Wärme zwischen einem Kathodenzufuhrstrom und einem Kathodenabgasstrom zu übertragen und einen ringförmigen Anodenrekuperator-Wärmetauscher, der radial einwärts von den Brennstoffzellen-Stacks positioniert ist, um Wärme zwischen einem Anodenzufuhrstrom und einem Anodenabgasstrom zu übertragen, umfasst.

In der DE 10 2006 031 866 A1 wird ein Brennstoffzellensystem beschrieben, das in einem Gehäuse untergebracht ist und wobei um das Brennstoffzellensystem eine zusätzliche Isolationsschicht vorgesehen ist, so dass zwischen dem Außengehäuse und der Isolationsschicht ein Spalt entsteht.

Die DE 199 45 715 A1 betrifft ein doppelwandiges Gehäuse für eine Brennstoffzelle, wobei das Gehäuse zur Aufnahme von Abwärme der Brennstoffzelle mit einem Latentwärmespeicher gefüllt sein kann. Dabei ist auch eine Vakuumisolation in Kombination mit Latentwärmespeichermaterialien möglich. Hierin nicht beschreiben werden weitere Schichten, die zur Führung von Medien und Fluiden geeignet sind, um die Energiebilanz zu verbessern.

In der DE 10 2007 010 741 A1 wird ein Batteriegehäuse offenbart, welches mit einem Außengehäuse versehen ist, um die Kühlung des Batterieverbundes zu ermöglichen. Dabei wird eine Kühlflüssigkeit durch das Gehäuse geleitet.

Aus der EP 0 588 004 A1 ist ein doppelwandiges Gehäuse zur Isolierung einer Hochtemperaturspeicherbatterie bekannt. Ferner werden Isolationsschichten mit und ohne Latentwärmespeicher beschrieben.

Die DE 10 2008 050 987 A1 beschreibt schließlich eine Kühlvorrichtung für einen Brennstoffzellenstapel.

Die Nachteile des aktuellen Standes der Technik sind, dass die Anlagen relativ groß und schwer gebaut werden müssen und die Wärmeverluste (Reduktion des Exergiepotentials) und die entstehenden Materialkosten auf Grund der Verwendung von hochtemperaturbeständigen Stählen, einer Vielzahl von Isolierungen und erhöhten Materialeinsatz, hoch sind.

Aufgabe der vorliegenden Erfindung ist es daher ein Behältnis zur Aufnahme und zum Betrieb von Hochtemperaturbrennstoffzellen bereitzustellen, welches die Nachteile des Standes der Technik überwindet.

Die Aufgabe wird gelöst durch ein Behältnis gemäß dem unabhängingen Anspruch 1. Bevorzugte Ausführungen sind in den abhängigen Ansprüchen definiert. Besonders vorteilhaft ist es dabei, dass die Anordnung der verschiedenen Schichten und die dadurch gegebenenfalls gebildeten Zwischenräume geeignet sind, Medien, Fluide und Wärmespeichermaterialien zu führen oder zu halten, um die Energiebilanz zu verbessern.

Hochtemperaturbrennstoffzellen verwenden keramische Elektrolyte zur Leitung von Sauerstoffionen, um durch die Übertragung von Sauerstoffionen von einem oxidierenden Gasstrom an der Kathode der Hochtemperaturbrennstoffzelle zu einem reduzierenden Gasstrom an der Anode der Hochtemperaturbrennstoffzelle einen elektrischen Strom zu produzieren. Hochtemperaturbrennstoffzellen benötigen einen Betriebstemperaturbereich, der verglichen mit jeglichen anderen Brennstoffzelltechnologien der höchste ist, wodurch eine Reihe von Vorteilen entstehen. Die Geschwindigkeit elektrochemischer Reaktionen der Hochtemperaturbrennstoffzellen erhöht sich mit steigender Temperatur, wodurch die Aktivierungsspannungsverluste für die Hochtemperaturbrennstoffzellen verringert werden. Die hohe Betriebstemperatur von Hochtemperaturbrennstoffzellen kann die Notwendigkeit von Edelmetallkatalysatoren ausschließen, wodurch Materialkosten wesentlich reduziert werden können.

Im Sinne der vorliegenden Erfindung ist eine Schicht eine sehr dünne, größere Fläche aus Material bzw. Werkstoff, wobei die Schicht aus Material bestehen kann, welches für Fluide durchlässig ist oder aus Material, welches für Fluide undurchlässig ist. Des Weiteren kann im Sinne der vorliegenden Erfindung das Material, aus dem die Schicht besteht, einteilig ausgebildet sein, aus einer Netzstruktur bestehen oder porös sein. Eine erfindungsgemäße Schicht kann eine Wärmedurchgangsschicht, Isolierschicht oder Speicherschicht sein, je nachdem aus welchem Material sie besteht. Im Sinne der vorliegenden Erfindung ist die Isolierschicht für bestimmte Stoffe bzw. Fluide undurchlässig oder weist eine gegen bestimmte Einflüsse abschirmende Funktion auf. Dadurch wird die Abgabe von Wärme vom erfindungsgemäßen Behältnis an die Umgebung verringert und somit der Wärmeverlust insgesamt reduziert. Des Weiteren kann im Sinne der vorliegenden Erfindung durch die Wärmedurchgangsschicht Wärme von einem Zwischenraum zu einem anderen Zwischenraum über die Wärmedurchgangsschicht abgegeben werden. Die Speicherschicht kann die Funktion eines Latentwärmespeichers aufweisen, welcher thermische Energie verborgen, verlustarm, mit vielen Wiederholzyklen und über lange Zeit speichern kann. Die Schichten können aus unterschiedlichen Materialien bestehen, wodurch die Funktionen der einzelnen Schichten unterschiedlich sein können. Insbesondere bevorzugt ist es bei der vorliegenden Erfindung, wenn die innere Schicht eine Isolierschicht ist oder eine Isolierschicht, die zusätzlich eine Speicherschicht aufweist. Diese Speicherschicht ist jedoch lediglich auf der Seite der inneren Schicht aufgebracht, die den Hochtemperaturbrennstoffzellen zugewandt ist. Die äußere Schicht sowie die dritte und vierte Schicht sind jeweils Isolierschichten. Im Sinne der vorliegenden Erfindung können alle Schichten mehrschichtig aufgebaut sein, jedoch ist insbesondere die vierte Schicht mehrschichtig aufgebaut und eine Isolierschicht sowie eine weitere Schicht aufweist, welche für jegliche Massenströme völlig undurchlässig ist. Vorteilhaft an diesem Aufbau ist somit, dass das erfindungsgemäße Behältnis von der Umgebung abgeschirmt ist, wodurch zum einen sehr wenig Wärme nach au-ßen abgegeben wird, wodurch der Wärmeverlust insgesamt reduziert wird und zum anderen das Behältnis nach außen hin kalt ist, wodurch das Verbrennungsrisiko für den Anwender nahezu eliminiert wurde. Des Weiteren wird der Wärmeverlust durch die interne Rückführung der Wärme reduziert.

Als Zwischenraum wird erfindungsgemäß der Bereich bezeichnet, der zwischen zwei übereinander angeordneten Schichten bzw. benachbarten Schichten ausgebildet ist bzw. durch diese Schichten begrenzt wird. Im Sinne der vorliegenden Erfindung bilden zwei übereinander angeordnete Schichten einen Zwischenraum aus, wobei erfindungsgemäß zumindest einer dieser Zwischenräume mit Fluiden durchdringbar ist. Fluide sind im Sinne der vorliegenden Erfindung Gase oder Flüssigkeiten. Des Weiteren können in Zwischenräumen Kabel aufgenommen werden oder durch die Schichten hindurchgeführt werden. Somit ist der Aufbau des erfindungsgemäßen Behältnisses insgesamt kompakt und die Baugröße verringert.

Besonders bevorzugt ist ein erfindungsgemäßes Behältnis 1, bei dem im Innenraum eine zusätzliche Schicht angeordnet ist, wobei diese Schicht eine druckstabile Schicht 3e ist.

Die druckstabile Schicht kann im Sinne der vorliegenden Erfindung eine hybridartig aufgebaute Schicht sein. Im Sinne der vorliegenden Erfindung sind zwei unterschiedliche Ausgestaltungen der druckstabilen Schicht möglich, die sich auf Grund ihrer Anordnung innerhalb des Behältnisses unterscheiden können. Dabei ist insbesondere eine druckstabile Schicht bevorzugt, welche über der dritten Schicht angeordnet ist und diese vollständig umhüllt sowie direkt an der äußeren Schicht angeordnet ist. Direkt bedeutet erfindungsgemäß, dass zwischen der druckstabilen Schicht und der äußeren Schicht kein Zwischenraum ausgebildet ist. Diese Ausgestaltung der druckstabilen Schicht ist kühl und weist die Funktion einer Wärmeisolierung auf. Die zweite Ausgestaltung der druckstabilen Schicht ist zwischen der inneren Schicht und einem Mittelvolumen ausgebildet. Diese Ausgestaltung der druckstabilen Schicht ist heiß und weist die Funktion einer Wärmedurchgangsschicht auf.

Vorteilhaft an dieser Ausführungsform ist, dass der Druck im erfindungsgemäßen Behältnis nur von dem Druckverhältnis eines Verdichters, mit dem das Behältnis gekoppelt ist, abhängig ist und nur die druckstabile Schicht den Druck aufnehmen muss.

Insbesondere bevorzugt ist ein erfindungsgemäßes Behältnis 1, bei dem die innere Schicht 3b zumindest zweiteilig aufgebaut ist, wobei der Teil der Schicht, welcher den Hochtemperaturbrennstoffzellen 2 zugewandt ist, eine Speicherschicht ist.

Bevorzugt ist ein erfindungsgemäßes Behältnis 1, welches im Wesentlichen eine kugelartige, kubusartige oder vieleckartige Form aufweist.

Erfindungsgemäß bevorzugt ist dabei, dass die Kugel, der Kubus oder das Vieleck gegebenenfalls entlang mindestens einer seiner Rotationsachsen gestreckt und/oder verzerrt ist.

Besonders bevorzugt ist dabei weiterhin, dass das Behältnis 1 rotationssymmetrisch ist.

Weiterhin ist ein erfindungsgemäßes Behältnis 1 bevorzugt, wobei die innere Schicht 3b eine torusartige Form aufweist und ein Mittelvolumen 5 ausbildet, welches konisch, zylindrisch oder hyperbolisch ausgebildet ist.

Ein Torus ist nach allgemeiner mathematischer Definition ein topologisches Produkt zweier Kreise. Die Kreise werden derart miteinander verbunden, dass sie eine wulstartig geformte Fläche mit einem Loch ausbilden. Ein Längsschnitt durch einen solchen Torus zeigt in der bildhaften Darstellung zwei Kreise symmetrisch zur Achse (rotationssymmetrischer Kreisring).

In der vorliegenden Erfindung ist es jedoch auch möglich, dass der Torus entlang seiner Rotationsachse gestreckt ist. In diesem Fall besteht der Torus aus zwei zylinderartigen Rohren (mit unterschiedlichem Radius), die oben und unten jeweils ein stereometrisches Element (Bsp. Halbkreiskappe oder Halbkreissegmente) aufweisen. In einem anderen Fall kann die eine oder die andere oder beide zylindrische Rohrgeometrien dieses Toruses auch eine abschnittsweise variable Geometrie (Bsp. Kegelgeometrie oder hyperbolische Geometrie) besitzen, welche sich in eine Richtung hin verjüngt. Auch in diesem Fall weist der Querschnitt an der der Ober- und Unterseite des Kegels jeweils ein stereometrisches Element (Bsp. Halbkreiskappe oder Halbkreissegment) auf.

Weiterhin kann der Torus auch entlang seiner Rotationsachse gestreckt und verzerrt sein. In diesem Fall zeigt ein Querschnitt durch den Torus einen schiefen Kegel, mit den entsprechenden stereometrischen Elementen an der Ober-und Unterseite des Kegels.

Bevorzugt ist ferner ein erfindungsgemäßes Behältnis 1, wobei die Hochtemperaturbrennstoffzellen 2 planar, tubulär, monolithisch oder eine Kombination der planaren und tubulären Bauweise sind.

Vorteilhaft an der Verwendung von Hochtemperaturbrennstoffzellen, welche planar sind, ist, dass diese in der Lage sind, eine sehr hohe volumetrische Leistungsdichte zu erreichen. Des Weiteren können planare Hochtemperaturbrennstoffzellen durch die Verwendung von preiswerten Fertigungstechniken in Masse produziert werden, wodurch sich die Herstellungskosten insgesamt verringern. Auch die Verwendung von Hochtemperatrubrennstoffzellen, welche monolithisch sind, ist vorteilhaft, da diese Hochtemperaturbrennstoffzellen ohne eine Stützstruktur auskommen und Leistungsdichten von 8000W/kg ermöglichen.

Besonders bevorzugt ist dabei, dass die Hochtemperaturbrennstoffzellen 2, welche planar sind, als Hochtemperaturbrennstoffzellenstapel ausgebildet sind. Im Sinne der vorliegenden Erfindung können die Hochtemperaturbrennstoffzellenstapel auch als Trauben zusammengefasst werden.

Erfindungsgemäß bevorzugt ist ferner ein Behältnis 1, wobei die jeweiligen Schichten 3 aus hochwarmfesten metallischen Materialien, Metall, Legierungen, Stahl, Kunststoff, Keramik, Schaumstoff, deren Kombinationen oder Verbundwerkstoffen bestehen.

Im Sinne der vorliegenden Erfindung ist die Wahl des Materials von der jeweiligen Funktion der Schicht abhängig, nämlich ob die Schicht die Funktion einer Isolierschicht, einer Wärmedurchgangsschicht, einer Speicherschicht oder einer druckstabilen Schicht aufweisen soll. Weiterhin kann im Sinne der vorliegenden Erfindung die Schicht hybridartig aufgebaut sein. Insbesondere vorteilhaft ist es, wenn die Schichten aus unterschiedlichen Materialien bestehen und somit unterschiedliche Funktionen übernehmen können. Keramik kann beispielsweise als Material für eine Isolierschicht dienen, wohingegen gekapselte Salze oder gekapseltes flüssiges Metall insbesondere als Materialien für eine Speicherschicht geeignet sind und legierter Stahl generell als Material für Wärmedurchgangsschichten geeignet ist.

Bevorzugt ist dabei insbesondere, dass die jeweiligen Schichten 3 aus unterschiedlichen Materialien bestehen, welche unterschiedliche Wärmedurchgangswerte aufweisen.

Der Wärmedurchgangswert ist ein Maß für den Wärmedurchgang durch einen festen Körper (etwa eine Wand) von einem Fluid in ein zweites Fluid aufgrund eines Temperaturunterschiedes zwischen den Fluiden. Im Fall einer ebenen Wand gibt er den Wärmestrom (Wärmeenergie pro Zeit) je Fläche der Wand und je Kelvin Temperaturunterschied der beiden Fluide an (W/(m²·K)). Der Wärmedurchgangswert ist abhängig von den Wärmeübergangswerten zwischen dem festen Körper und den Fluiden sowie der Wärmeleitfähigkeit und Geometrie des festen Körpers. Der Wärmedurchgangswert ist ein spezifischer Wert eines Bauteils und wird im Wesentlichen durch die Wärmeleitfähigkeit und Dicke der verwendeten Materialien bestimmt, aber auch durch die Wärmestrahlung und Konvektion an den Oberflächen. Je höher der Wärmedurchgangswert, desto schlechter ist die Wärmedämmung des Körpers und demnach ist die Wärmedämmeigenschaft umso besser, je niedriger der Wärmedurchgangswert ist.

Im Sinne der vorliegenden Erfindung ist es insbesondere vorteilhaft, wenn die Schichten aus Material bestehen, welches einen niedrigen Wärmedurchgangswert aufweist. Lediglich die druckstabile Schicht, welche zwischen der inneren Schicht und dem Mittelvolumen angeordnet ist, weist erfindungsgemäß einen hohen Wärmedurchgangswert auf. Vorteilhaft bei einem solchen zwiebelartigen Aufbau ist, dass dadurch weniger Wärme an die Umgebung abgegeben wird und zusätzlich durch die Teilrückführung der Wärme auf Grund der gezielten Führung von Fluiden in den Innenraum, der Wärmeverlust reduziert wird. Weiterhin vorteilhaft ist, dass Leckages zulässig sind, weil der Massenstrom, auf Grund des Aufbaus des erfindungsgemäßen Behältnisses, immer nach Innen erfolgt.

Weiterhin ist ein erfindungsgemäßes Behältnis 1 bevorzugt, wobei Fluide Betriebsmedien, Kühlmedien, Wärmemedien, Wärmespeichermedien, oder Brennstoffe sind.

Im Sinne der vorliegenden Erfindung sind Kühlmedien oder Wärmemedien Medien, welche zum Abtransport von Wärme eingesetzt werden. Hierbei können Kühlmedien oder Wärmemedien in einem Kühlzyklus bzw. Heizzyklus die Enthalpie entlang des Temperaturgradienten zu einer Stelle niedrigerer bzw. höherer Temperatur transportieren. Insbesondere Wasser, Luft, Thermalöle, Luft-Wasser-Mischungen oder Brennstoff können als Kühlmedien bzw. Wärmemedien verwendet werden. Im Sinne der vorliegenden Erfindung können Kühlmedien bzw. Wärmemedien auch als Wärmeübertragungsmedien bezeichnet werden. Kühlmedien und Wärmemedien unterscheiden sich anhand des Temperaturbereichs in dem sie verwendet werden. Wärmespeichermedien sind Medien zur Speicherung von thermischer Energie. Als Wärmespeichermedien dienen insbesondere Wasser, Wasser-dampf, Salze oder Metalle. Ein Brennstoff ist ein chemischer Stoff, dessen gespeicherte Energie sich durch chemische Reaktion in nutzbare Energie umwandeln lässt. Brennstoffe werden nach verschiedenen Kriterien unterteilt, etwa nach ihrem Aggregatzustand in feste, flüssige und gasförmige Brennstoffe. Je nach Herkunft wird differenziert zwischen natürlichen, veredelten oder synthetischen Brennstoffen.

Ferner ist ein erfindungsgemäßes Behältnis 1 bevorzugt, welches einen ersten Zwischenraum 4a zwischen der inneren Schicht 3b und der dritten Schicht 3c, einen zweiten Zwischenraum 4b zwischen der dritten Schicht 3c und vierten Schicht 3d und einen dritten Zwischenraum 4c zwischen der vierten Schicht 3d und äußeren Schicht 3a aufweist.

Bevorzugt ist dabei insbesondere, dass die jeweiligen Zwischenräume 4 von unterschiedlichen Fluiden durchdringbar sind.

Weiterhin ist ein erfindungsgemäßes Behältnis 1 bevorzugt, wobei Abgas vom Mittelvolumen 5 kommend im Wärmetausch-Rekuperator Wärme abgibt.

Bevorzugt ist außerdem ein erfindungsgemäßes Behältnis 1, wobei das Mittelvolumen 5 mit einem Ausgang einer Turbine 7 gekoppelt ist.

Ferner ist ein erfindungsgemäßes Behältnis 1 bevorzugt, wobei zumindest ein Zwischenraum 4 mit einem Verdichter 8 gekoppelt ist.

Im Sinne der vorliegenden Erfindung ist insbesondere der zweite Zwischenraum mit einem Verdichter gekoppelt.

Insbesondere bevorzugt ist ein erfindungsgemäßes Behältnis 1, wobei der erste Zwischenraum 4a und der zweite Zwischenraum 4b über einen Wärmetausch-Rekuperator 6 miteinander gekoppelt sind.

Bevorzugt ist weiterhin ein erfindungsgemäßes Behältnis 1, wobei zumindest ein Zwischenraum 4 und der Raum, in dem sich die Hochtemperaturbrennstoffzellen 2 befinden, über einen zweiten Wärmetauscher 9 miteinander gekoppelt sind.

Im Sinne der vorliegenden Erfindung ist insbesondere der erste Zwischenraum mit einem zweiten Wärmetauscher gekoppelt.

Weiterhin ist ein erfindungsgemäßes Behältnis 1 bevorzugt, wobei zumindest ein Zwischenraum 4 mit einem Dampfgenerator 10 gekoppelt ist.

Im Sinne der vorliegenden Erfindung ist insbesondere der dritte Zwischenraum mit einem Dampfgenerator gekoppelt.

Die vorliegende Erfindung wird mit den beigefügten Zeichnungen näher erläutert. Es zeigt:
Fig. 1 eine Schnittansicht einer ersten Ausführungsform eines erfindungsgemäßen Behältnisses;
Fig. 2 eine Schnittansicht einer zweiten Ausführungsform eines erfindungsgemäßen Behältnisses;
Fig. 3 eine Schnittansicht einer Ausführungsform eines erfindungsgemäßen Behältnisses in Form einer hybriden Mikrogasturbinen(MGT)-Brennstoffzellen-(FC)-Anlage;
Fig. 4 die Ausführungsform der Fig. 3 mit Fluidströmen innerhalb des erfindungsgemäßen Behältnisses;
Fig. 5 eine Schnittansicht der Ausführungsform der Fig.3 mit vergrößerten Ansichten, welche die Fluidströme im Behältnis zeigen;
Fig. 6 eine Schnittansicht der Ausführungsform der Fig. 3 mit vergrößerten Ansichten, welche die Wärmeflüsse im Behältnis zeigen;
Fig. 7a einen vergrößerten Ausschnitt des oberen Bereichs eines erfindungsgemäßen Behältnisses;
Fig. 7b einen vergrößerten Ausschnitt des unteren Bereichs eines erfindungsgemäßen Behältnisses;
Fig. 8 eine Prinzipskizze eines Wärmeschaltbildes eines erfindungsgemäßen Behältnisses in Form einer hybriden Mikrogasturbinen-Brennstoffzellen-Anlage.

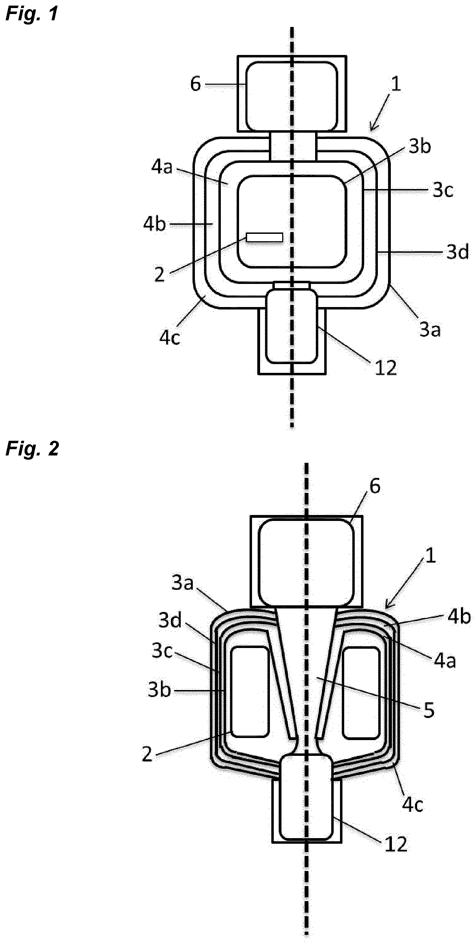

In Figur 1 wird eine Ausführungsform des erfindungsgemäßen Behältnisses 1 gezeigt. Das erfindungsgemäße Behältnis 1 ist zwiebelartig aufgebaut und wird durch eine äußere Schicht 3a gebildet. Insbesondere bevorzugt ist eine äußere Schicht 3a, die eine Isolierschicht ist. Im Innenraum des Behältnisses 1 sind Hochtemperaturbrennstoffzellen 2 angeordnet, die entweder planar, tubulär, monolithisch oder eine Kombination der planaren und tubulären Bauweise sind. In der vorliegenden Ausführungsform ist beispielhaft nur eine Hochtemperaturbrennstoffzelle 2 gezeigt, es ist jedoch im Sinne der vorliegenden Erfindung bevorzugt, dass mehrere Hochtemperaturbrennstoffzellen 2 im Innenraum des Behältnisses 1 angeordnet sind. Weiterhin ist bevorzugt, dass die Hochtemperaturbrennstoffzellen 2 in Stapeln angeordnet sind, insbesondere wenn die Hochtemperaturbrennstoffzellen 2 planar sind. Die Hochtemperaturbrennstoffzelle 2 wird durch eine innere Schicht 3b vollständig umhüllt. Über der inneren Schicht 3b ist in dieser Ausführungsform eine dritte Schicht 3c angeordnet, welche die innere Schicht 3b vollständig umhüllt. Zwischen der inneren Schicht 3b und der dritten Schicht 3c ist ein erster Zwischenraum 4a ausgebildet. Über der dritten Schicht 3c ist eine vierte Schicht 3d angeordnet, welche die dritte Schicht 3c vollständig umhüllt, wobei zwischen der dritten Schicht 3c und der vierten Schicht 3d ein zweiter Zwischenraum 4b ausgebildet ist. Die vierte Schicht 3d ist außerdem von der äußeren Schicht 3a, welche über der vierten Schicht 3d angeordnet ist, vollständig umhüllt. Zwischen der vierten Schicht 3d und der äußeren Schicht 3a ist ein dritter Zwischenraum 4c ausgebildet. Im Sinne der vorliegenden Erfindung ist es besonders bevorzugt, dass die Schichten 3 aus unterschiedlichen Materialien bestehen. Insbesondere bevorzugt ist, dass die innere Schicht 3b, die dritte Schicht 3c und die vierte Schicht 3d aus einem anderen Material bestehen als die äußere Schicht 3a. Außerdem ist erfindungsgemäß zumindest ein Zwischenraum 4 mit Fluiden durchdringbar, wobei auch Kabel in zumindest einem der Zwischenräume 4 aufgenommen werden können oder durch die Schichten 3 geführt werden können. In der Figur 1 ist weiterhin gezeigt, dass das erfindungsgemäße Behältnis 1 im oberen Bereich mit einem Wärmetausch-Rekuperator 6 und im unteren Bereich mit einem Turbosatz 12 (Turbine 7, Verdichter 8, Generator 11) in Kontakt steht.

In der Figur 2 ist eine zweite Ausführungsform des erfindungsgemäßen Behältnisses 1 gezeigt. Auch diese Ausführungsform weist einen zwiebelartigen Aufbau auf, wie er in der Figur 1 gezeigt ist. Im Unterschied zu der in Figur 1 gezeigten Ausführungsform, weist die innere Schicht 3b eine torusartige Form auf, wodurch in dem Behältnis 1 ein Mittelvolumen 5 ausgebildet ist. Durch die torusartige Form der inneren Schicht 3b entsteht ein ringförmiger Raum, in dem Hochtemperaturbrennstoffzellen 2 aufgenommen sind. Vorliegend ist beispielhaft eine Hochtemperaturbrennstoffzelle 2 gezeigt, jedoch sind die Hochtemperaturbrennstoffzellen 2, welche planar sind, vorzugsweise in Stapeln angeordnet. Für hybride Mikrogasturbinen-Brennstoffzellen-Systeme bietet sich insbesondere bei kleineren Anlagen diese torusartige Bauform an, da in diesem Fall die Abgasführung sinnvollerweise zentral erfolgt. Dies hat den Vorteil, dass das Behältnis 1 im Zentralbereich dann auch noch die Funktion einer Teilwärmerekuperation übernimmt. Somit wird ein Wärmefluss vom Abgas in die komprimierte Luft geleitet, wodurch der Wärmetausch-Rekuperator 6 kleiner gebaut werden kann und/oder effektiver ist.

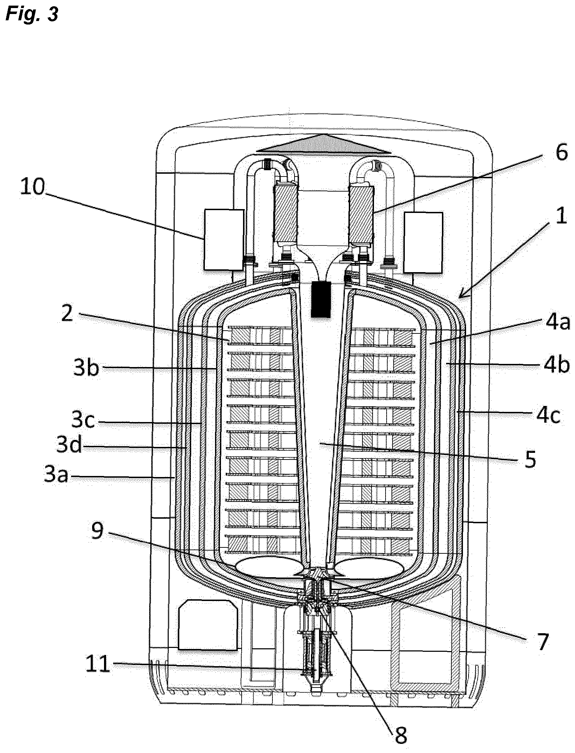

Figur 3 zeigt ein erfindungsgemäßes Behältnis 1 in einer torusartigen Bauform, wie es auch in Figur 2 gezeigt ist, in Form einer Mikrogasturbinen(MGT)-Brennstoffzellen-(FC)-Anlage. Das Behältnis 1 wird durch eine äußere Schicht 3a gebildet, welche die Funktion eines "Containments" übernimmt und somit das Behältnis 1 von der Umgebung abgrenzt. Im Inneren des Behältnisses 1 sind weitere Schichten 3 angeordnet. Durch die torusartige Form der inneren Schicht 3b ist im Inneren des Behältnisses 1 ein Mittelvolumen 5 ausgebildet und es ist eine rotationsförmige Kammer für die Aufnahme von Hochtemperaturbrennstoffzellen 2 ausgebildet. Durch das Mittelvolumen 5 kann Abgas zentral geleitet werden. In dieser Ausführungsform sind die Hochtemperaturbrennstoffzellen 2 planar und in Stapeln angeordnet. Des Weiteren ist über der inneren Schicht 3b eine dritte Schicht 3c angeordnet, welche die innere Schicht 3b vollständig umhüllt. Zwischen der inneren Schicht 3b und der dritten Schicht 3c ist ein erster Zwischenraum 4a ausgebildet. Weiterhin ist über der dritten Schicht 3c eine vierte Schicht 3d angeordnet, welche die dritte Schicht 3c vollständig umhüllt und zwischen diesen Schichten 3c, 3d ist ein zweiter Zwischenraum 4b ausgebildet. Die vierte Schicht 3d wird von der äußeren Schicht 3a vollständig umhüllt und zwischen den Schichten 3d, 3a ist ein dritter Zwischenraum 4c ausgebildet. In der Ausführungsform ist außerdem gezeigt, dass oberhalb des Behältnisses 1 ein Wärmetausch-Rekuperator 6 angeordnet ist. Das über das Mittelvolumen 5 kommende Abgas gibt Wärme an die vom Verdichter 8 kommende komprimierte Luft im Wärmetausch-Rekuperator 6 ab. Außerdem ist in Figur 3 gezeigt, dass das Mittelvolumen 5 mit einem Ausgang einer Turbine 7 gekoppelt ist sowie zumindest der zweite Zwischenraum 4b mit einem Verdichter 8 gekoppelt ist. Weiterhin ist in dieser Ausführungsform gezeigt, dass der erste Zwischenraum 4a und der zweite Zwischenraum 4b über einen Wärmetausch-Rekuperator 6 miteinander gekoppelt sind. Außerdem sind über einen zweiten Wärmetauscher 9 zumindest der erste Zwischenraum 4a und die Hochtemperaturbrennstoffzellen 2 miteinander gekoppelt. In der Figur 3 ist weiterhin gezeigt, dass zumindest der dritte Zwischenraum 4c mit einem Dampfgenerator 10 gekoppelt ist.

Auf Grund des Aufbaus des erfindungsgemäßen Behältnisses kann das Behältnis dünnwandiger sein und aus einem kostengünstigeren Material gefertigt werden. Hierdurch wird auch die Wärmekapazität günstig beeinflusst. Durch die radiale Integration der prozessbedingten Schichten können diese sehr dünnwandig ausgeführt werden (teilweise nur mit hochtemperaturbeständigen metallischen Materialien wie z. Bsp. Blechfolie, Keramik oder ähnlich überzogener Isolierung), da keine großen Druckdifferenzen wirken. Weiterhin dürfen diese im Fall der Prozessluftführung auch kleinere Leckagen besitzen, da durch die geringe Druckdifferenz nur verhältnismäßig geringe Massenstromanteile, vorteilhafterweise in Richtung der Hochtemperaturbrennstoffzellen fließen. Durch die drastische Reduktion der Wärmekapazität des Systems (im Vergleich zu herkömmlichen Bauweisen, bei denen alle Komponenten über Rohre miteinander verbunden sind) wird das Zeitverhalten (Aufheizvorgang, Laständerung etc.) günstig beeinflusst.

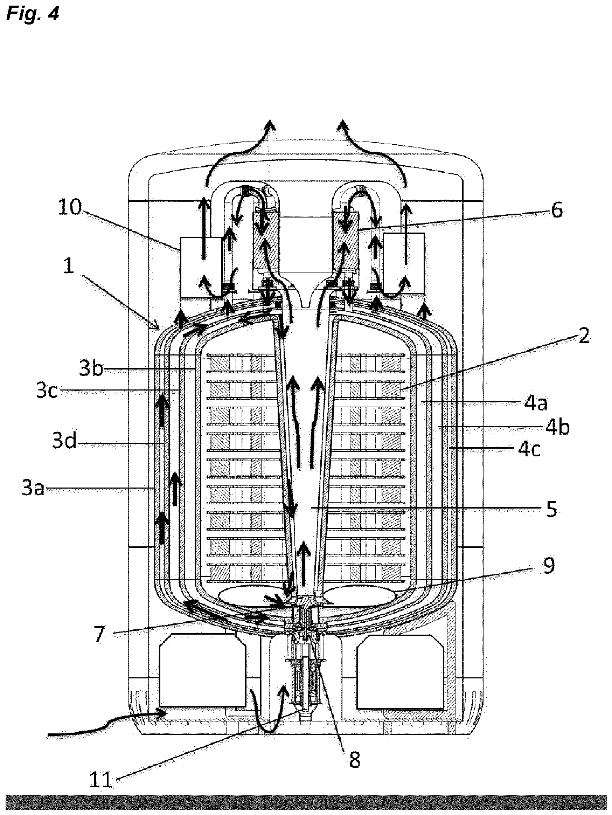

In Figur 4 wird die Ausführungsform der Figur 3 gezeigt, wobei in der Figur 4 die Fluidströme innerhalb des erfindungsgemäßen Behältnisses 1 sowie im Zusammenspiel mit einzelnen Komponenten innerhalb einer Mikrogasturbinen-Brennstoffzellen-Anlage dargestellt sind. Die Luft wird von einem Verdichter 8 angesaugt und komprimiert (durch die Komponentendruckverluste etwas höher als der Betriebsdruck der Hochtemperaturbrennstoffzelle 2). Die komprimierte Luft fließt über den zweiten Zwischenraum 4b des mehrschichtigen Behältnisses 1 zum Wärmetausch-Rekuperator 6 und vom Wärmetausch-Rekuperator 6 zurück durch den ersten Zwischenraum 4a des mehrschichtigen Behältnisses 1 in einen zweiten Wärmetauscher 9, welcher teilweise Wärme aus der Nachverbrennung und dem Rückfluss der Hochtemperaturbrennstoffzellen 2 (hier nicht dargestellt) bezieht. Die Wärme aus der Nachverbrennung ist erforderlich, da in den meisten Betriebspunkten die Abgaswärme hinter der Turbine 7 zur Vorwärmung der Luft im Wärmetausch-Rekuperator 6, auf die Betriebstemperatur der Hochtemperaturbrennstoffzellen 2 und die Turbineneintrittstemperatur, nicht ausreicht.

Es sei aber angemerkt, dass das Prozesswasser im Fallbeispiel des Steam-Reformingprozesses (bei dem Konzept eines überlagerten Wasser-Dampf-Kreislaufes) über den dritten Zwischenraum 4c des Behältnisses 1 geführt wird, um "Restverlustwärme einzufangen" und um die Temperatur sehr gering zu halten, wodurch die Verwendung von Kunststoff als Material für die äußere Schicht 3a möglich ist. Das Wasser wird mit einer Pumpe (nicht gezeigt) auf einen Druck über den Betriebsdruck gebracht, über den dritten Zwischenraum 4c vorgewärmt und in einem Dampfgenerator 10 mit Hilfe der Abgaswärme verdampft, anschließend überhitzt und dem Brenngasstrom für den Dampfreformierungprozess zugeführt. Hierbei wird durch die endotherme Reaktion Wärme entzogen (Reformer nicht dargestellt).

Nach der Reaktion in den Hochtemperaturbrennstoffzellen 2, die als Stapel angeordnet sind, fließen die Abgase der Hochtemperaturbrennstoffzellen 2 über den zweiten Wärmetauscher 9 und über die Nachverbrennung zur Turbine 7, wo die Expansion erfolgt. Die Turbine 7, treibt über eine gemeinsame Welle den Generator 11 und den Verdichter 8 an. Das Turbinenabgas gibt Wärmeenergie an die druckstabile Schicht 3e und im Wärmetausch-Rekuperator 6 an die vom Verdichter 8 kommende komprimierte Luft ab.

Das erfindungsgemäße Behältnis 1 bildet durch seine konzentrischen Schichten 3 und Zwischenräume 4 die Hauptversorgungsleitungen des Kreisprozesses. Weiterhin liefert es auch ein kompaktes Containment. Im Falle der Dampfreformierung mit überlagertem Wasser-Dampf-Kreislauf dient der dritte Zwischenraum 4c zur Wasservorwärmung und zur Verminderung von Restwärmeverlusten.

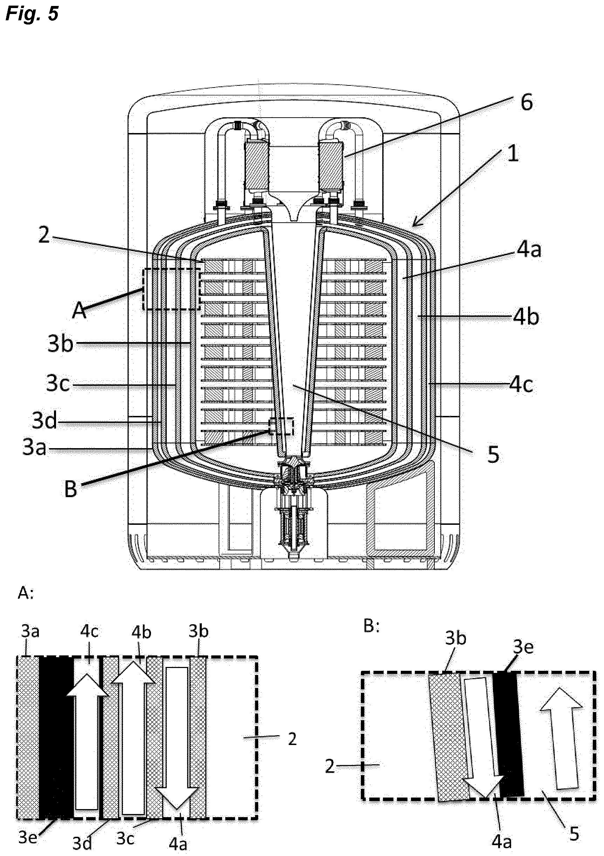

Figur 5 zeigt die Fluidstromrichtungen bei einer Ausführungsform des erfindungsgemäßen Behältnisses 1 wie in Figur 3 bzw. Figur 4 dargestellt. Der Ausschnitt A zeigt eine vergrößerte Ansicht der Fluidstromrichtungen zwischen der inneren Schicht 3b, über eine dritte Schicht 3c, eine vierte Schicht 3d und eine äußere Schicht 3a. Weiterhin wird deutlich, dass die vierte Schicht 3d in dieser Ausführungsform mehrschichtig aus zwei Schichten aufgebaut ist, wobei eine Schicht eine Isolierschicht darstellt und die zweite Schicht (dünner schwarzer Balken), eine Schicht, welche für Massenströme völlig undurchlässig ist. Diese zweite Schicht bildet die Abgrenzung des dritten Zwischenraumes 3c. In dieser Ausführungsform wird durch den ersten Zwischenraum 4a die Luft, die vom Wärmetausch-Rekuperator 6 in das Behältnis 1 wieder eintritt, geleitet. Im zweiten Zwischenraum 4b wird die komprimierte Luft vom Verdichter 8 zum Wärmetausch-Rekuperator 6 geführt. Im dritten Zwischenraum 4c wird beispielsweise Wasser geführt. In dieser Ausführungsform ist der dritte Zwischenraum 4c hin zur äußeren Schicht 3a von einer druckstabilen Schicht 3e begrenzt, welche direkt an der äußeren Schicht 3a angrenzt.

Der Ausschnitt B zeigt eine vergrößerte Ansicht der Fluidstromrichtungen zwischen der inneren Schicht 3b und dem Mittelvolumen 5 des erfindungsgemäßen Behältnisses, wobei zwischen der inneren Schicht 3b und dem Mittelvolumen 5 eine druckstabile Schicht 3e angeordnet ist. Dadurch ist zwischen der inneren Schicht 3b und der druckstabilen Schicht 3e auch ein erster Zwischenraum 4a ausgebildet, durch den die Luft, welche nach dem Wärmetausch-Rekuperator zurück in das erfindungsgemäße Behältnis 1 eingeleitet wurde, geführt wird. Im Mittelvolumen 5 wird das Abgas von der Turbine 7 geführt. Das Abgas und die Luft verlaufen im Gegenstrom zueinander, wobei das Abgas Wärmeenergie an die Luft, welche vom Wärmetausch-Rekuperator kommt, abgibt.

Die Verlustwärmeflüsse werden durch die dargestellten Fluidstromrichtungen wieder zum jeweils "richtigen Kreisprozesszustandspunkt" zurückgespielt.

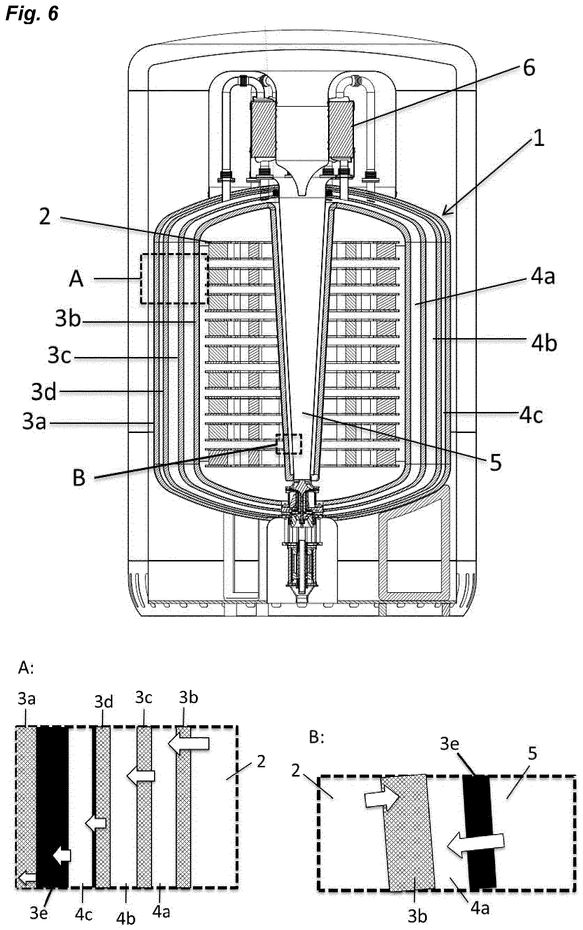

In Figur 6 wird eine Ausführungsform des erfindungsgemäßen Behältnisses 1 wie in Figur 3 bzw. Figur 4 dargestellt, wobei in dieser Ausführungsform die Wärmeflüsse detailliert gezeigt sind.

In Ausschnitt A werden die Wärmeflüsse von den Hochtemperaturbrennstoffzellen 2 über die innere Schicht 3b zum ersten Zwischenraum 4a, über die dritte Schicht 3c zum zweiten Zwischenraum 4b, über die vierte Schicht 3d in den dritten Zwischenraum 4c zur äußeren Schicht gezeigt. In dieser Ausführungsform ist der dritte Zwischenraum 4c hin zur äußeren Schicht 3a durch eine druckstabile Schicht 3e begrenzt, welche direkt an der äußeren Schicht 3a anliegt. Weiterhin wird auch in dieser Ausführungsform gezeigt, dass die vierte Schicht 3d mehrschichtig aufgebaut ist und aus einer Isolierschicht und einer Schicht (dünner schwarzer Balken) besteht, welche keine Masseströme durchtreten lässt. Die Pfeile stellen die Abgabe der Wärme dar. Aus dieser Ausführungsform wird deutlich, dass die Wärmeflüsse von innen nach außen erfolgen, nämlich von den Hochtemperaturbrennstoffzellen 2 zu der äußeren Schicht 3a hin, wobei die äußere Schicht 3a nach außen hin sehr wenig Wärme abgibt.

In Ausschnitt B werden die Wärmeflüsse zwischen den Hochtemperaturbrennstoffzellen 2 und dem Mittelvolumen 5 dargestellt. Das Mittelvolumen ist durch eine druckstabile Schicht 3e begrenzt, welche eine dichte Schicht darstellt und somit völlig undurchlässig für Masseströme ist. Zwischen dieser druckstabilen Schicht 3e und der inneren Schicht 3b ist ein erster Zwischenraum 4a ausgebildet. In diesem Zwischenraum 4a wird die Luft, welche vom Wärmetausch-Rekuperator 6 kommt, geführt. In dieser Ausführungsform wird deutlich dargestellt, dass die Wärme (Pfeil), die von den Hochtemperaturbrennstoffzellen 2 abgegeben wird, lediglich an die innere Schicht 3b abgegeben wird und somit nur geringe Wärmeenergie an den ersten Zwischenraum 4a abgegeben wird, wohingegen die Wärmeenergie des Abgases im Mittelvolumen 5 durch die druckstabile Schicht 3e in den ersten Zwischenraum 4a durchtritt und dort die Luft erwärmt.

Die innere Schicht 3b kann somit auch die Funktion einer Speicherschicht (bestehend aus flüssigen Salzen, flüssigen Metallen) als latenter Wärme übernehmen. Die innere Schicht 3b kann sandwichartig aufgebaut sein.

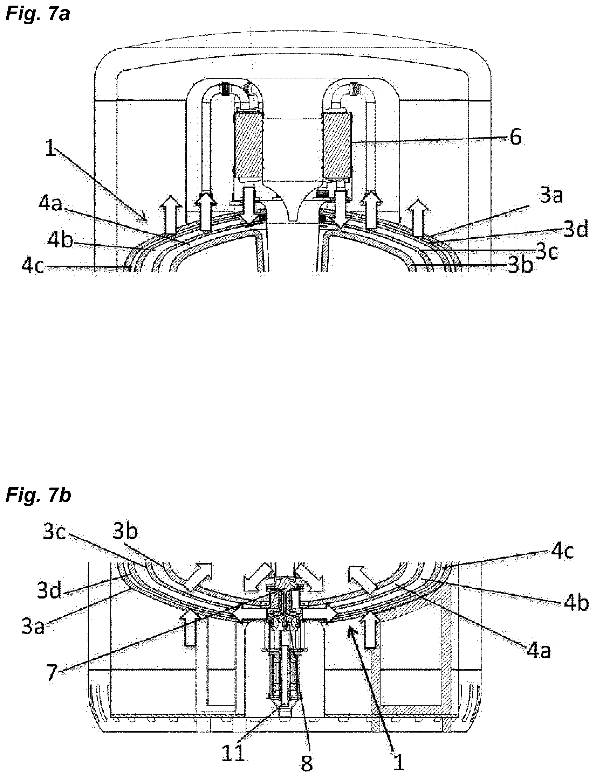

Figuren 7a und 7b zeigen Ausführungsformen eines erfindungsgemäßen Behältnisses 1 wie in Figur 3, wobei jeweils nur Teilbereiche dargestellt sind. In Figur 7a ist nur der Teilbereich dargestellt, der den oberen Teil des Behältnisses 1 zeigt und in Figur 7b ist nur der Teilbereich dargestellt, der den unteren Teil des Behältnisses 1 zeigt. In beiden Figuren wird insbesondere der Außenbereich des Behältnisses 1 gezeigt, an dem vorzugsweise an zwei Stellen Fluidströme ein- und ausgeleitet werden. In Figur 7a werden die Stellen des Behältnisses 1 gezeigt, an denen die Fluidströme aus dem Behältnis 1 in einen Wärmetausch-Rekuperator 6 eintreten und die Stellen, an denen die Fluidströme aus dem Wärmetausch-Rekuperator 6 in das Behältnis 1 eintreten. Figur 7b zeigt die Stellen im unteren Bereich des Behältnisses 1, an denen die Fluidströme in das Behältnis 1 eintreten und aus dem Behältnis 1 austreten. Diese Ein- und Austritte der Fluidströme sind insbesondere daher erforderlich, da über diese Stellen die Anbindung an wichtige Kreisprozesskomponenten, wie den Verdichteraustritt, Turbineneintritt, Reformereintritt, Rekuperatoreintritt, Rekuperatoraustritt, Wassereintritt und Wasseraustritt beim Steam-Reforming erfolgen (teilweise nicht dargestellt). Des Weiteren sind auch die Wasseraustritts, Fluidströme und Wasser-dampf(Gas)eintrittsfluidströme sowie Brenngaseintrittsströme nicht dargestellt.

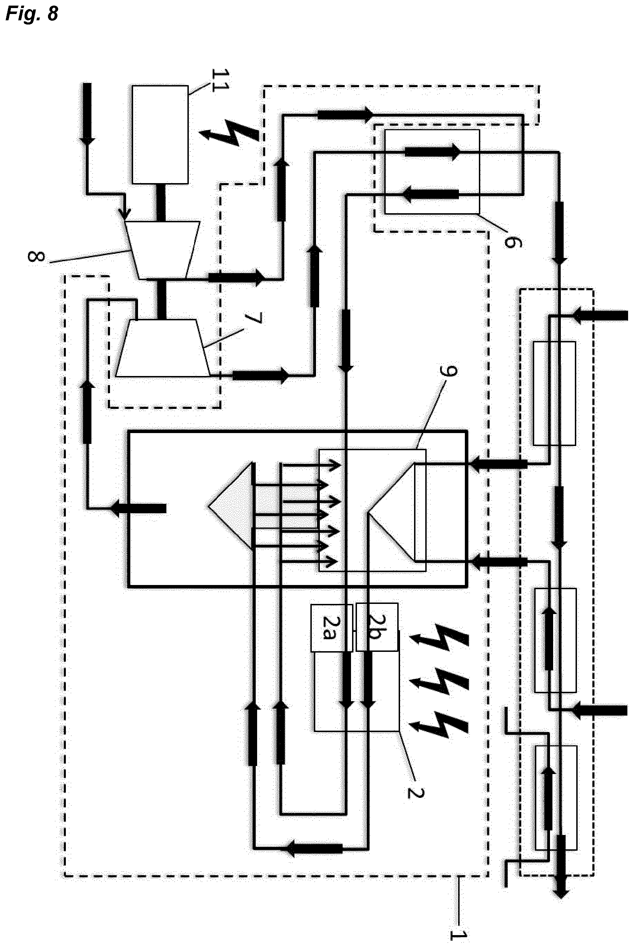

In Figur 8 ist eine Prinzipskizze für eine Ausführungsform und das dazugehörige Wärmeschaltbild eines erfindungsgemäßen Behältnisses 1 wie in Figur 4 gezeigt, in Form einer Mikrogasturbinenanlage dargestellt. Solche kleinen Anlagen werden zukünftig eine große Rolle für das Energiemanagement spielen, da mit ihnen eine hocheffektive Rückverstromung von chemisch gebundener Energie (z.B. als Methan aus einem Power-to-Gas Prozess) in Strom möglich sein wird.

Das Potential des Kraftwerkkonzepts liegt in der Verschaltung der Hochtemperaturbrennstoffzelle 2 mit der Turbine 7. Mittels des Verdichters 8 wird die Prozessluft für die Hochtemperaturbrennstoffzelle 2 verdichtet.

Diese komprimierte Luft wird im Wärmetauscher-Rekuperator 6 vorgeheizt, bevor sie über einen zweiten Wärmetauscher 9, welcher seine Wärme aus der Nachverbrennung (hier nicht dargestellt) bezieht, in die Kathode 2a einer Hochtemperaturbrennstoffzelle 2 geleitet wird. Die Wärme aus der Nachverbrennung ist erforderlich, da in den meisten Betriebspunkten die Abgaswärme hinter der Turbine 7 zur Vorwärmung der Luft im Wärmetausch-Rekuperator 6, auf die Betriebstemperatur der Hochtemperaturbrennstoffzellen 2 und die Turbineneintrittstemperatur, nicht ausreicht. Die erforderliche Höhe der Temperatur, welche höher als die Betriebstemperatur der Hochtemperaturbrennstoffzellen sein muss, kann nur so erreicht werden.

In der Hochtemperaturbrennstoffzelle 2 reagiert der Sauerstoff an der Anode 2b mit dem Kohlenmonoxid und dem Wasserstoff des Brenngases (Syngas aus der Reformierung) zu Wasser und Kohlendioxid. Es wird auf der Kathodenseite 2a die erhitzte Luft dem Hochtemperaturbrennstoffzellenstapel 2 zugeführt. Dort wird jedes Sauerstoffmolekül unter Zuhilfenahme von vier Elektronen in zwei O₂-Ionen aufgeteilt. Diese diffundieren durch den Elektrolyten zur Anode 2b, um dort mit dem Brenngasionen zu oxidieren. Zwischen Anode 2b und Kathode 2a entsteht hierdurch eine Elektronen- und lonenpotentialdifferenz. Der entstehende Gleichstrom wird in einem Wechselrichter (hier nicht dargestellt) auf den gewünschten Bedarf gewandelt. Im Hochtemperaturbrennstoffzellenstapel 2 findet keine vollständige Umsetzung statt. Um den Restanteil der brennbaren Bestandteile im Anodenabgas energetisch zu nutzen, wird dieser einer Nachoxidation (Nachverbrennung und/oder einem Katalysator) zugeführt (hier nicht dargestellt). Der Restsauerstoff im Kathodenabgas dient dabei als Oxidationspartner. Die dabei entstehenden heißen Abgase fließen über den zweiten Wärmetauscher 9 und erhöhen die Temperatur der aus dem Wärmetausch-Rekuperator 6 kommenden Luft auf die Betriebstemperatur. Im Anschluss daran fließen die Abgase zur Turbine 7. Hier erfolgt die Expansion. Die Turbine 7, treibt über eine gemeinsame Welle den Generator 11 und den Verdichter 8 an. Das Turbinenabgas gibt Wärmeenergie an die druckstabile Schicht 3e und im Wärmetausch-Rekuperator 6 an die verdichtete Luft ab. Die restliche Wärmeenergie wird in weiteren Wärmetauschern zur Vorwärmung des Dampfes (beim Steam-Reforming-Prozess (hier nicht dargestellt), des Brenngases und für Heizzwecke verwendet.

Vorteilhaft an der vorliegenden Erfindung ist, dass der Wirkungsgrad des Gesamtprozesses durch die Integration der Hochtemperaturbrennstoffzelle in ein Mikrogasturbinensystem auf einen Wert deutlich über dem Wirkungsgradwert der "reinen Hochtemperaturbrennstoffzelle (z.B. SOFC)" gesteigert wird. Diese Bauart liefert Wirkungsgrade welche sich im Maximalbereich des physikalisch Möglichen bewegen. Hierbei erfolgt eine exergetisch sinnvolle Wandlung der chemischen Energie des Brennstoffes in elektrische Energie. Zunächst erfolgt eine elektrochemische Wandlung in elektrische Energie im Rahmen des maximal exergetisch Machbaren über die Hochtemperaturbrennstoffzellen. Das über die Hochtemperaturbrennstoffzelle nicht wandelbare Exergiepotential (resultierend aus der Wärmeerscheinung bei hoher Temperatur und des nicht konvertierten Brennstoffes) wird durch die Einbettung der Hochtemperaturzelle mit einer anschließenden Nachoxidation des nicht konvertierten Brennstoffes in dem MGT-Prozess zur Arbeitserzeugung weiter genutzt.

Des Weiteren vorteilhaft an dem erfindungsgemäßen Behältnis ist, dass
a) ...die Materialwahl der äußeren Schicht, sich nach einer deutlich geringeren Temperatur (als die der Betriebstemperatur der Brennstoffzelle) richtet.
b) ...die kreisprozessbedingten Wärmeverluste (Exergieverluste) deutlich minimiert werden. Diese Wärme wird durch die gewählte Flussrichtung des Arbeitsfluides immer wieder in "Richtung des Prozesszustandes mit höherer Temperatur" zurückgespielt.
c) ...eine kompakte Bauweise des erfindungsgemäßen Behältnisses erlaubt.
d) ...sicherheitsrelevante Aspekte verbessert werden (kühlere Hülle = geringere Verbrennungsgefahr, Reduktion der Explosionsgefahr / die Schwachstelle wird im Falle der torusartigen Ausführung in das Zentrum gelegt).
e) ...die Kosten durch weniger und kostengünstigeres Material deutlich gesenkt werden. Im Fall eines äußeren Wassermantels kann sogar Kunststoff als äußere Schicht eingesetzt werden.
f) ...die Wärmekapazität in der Apparatur deutlich gesenkt wird (Verbesserung des zeitlichen Ansprechverhaltens).

Nachfolgend wird die vorliegende Erfindung noch einmal in anderen Worten zusammengefasst. Sie betrifft eine Anordnung von ringspaltförmigen um eine Zentralachse geschichtete Kanälen (incl. der dazwischenliegenden Wärmeisolierschichten), welche die Verbindungskanäle zu den einzelnen Komponenten eines Hochtemperaturbrennstoffzellensystems in hybrider Ausführung (Kombinationen mit einer Wärmekraftmaschine) oder nicht hybrider Ausführung bilden. Die Kanäle sind so angeordnet, dass Verlustwärme durch die Fluidflussrichtung wieder zurücktransportiert wird. Der Haupteinsatzbereich ergibt sich bei druckaufgeladenen Hochtemperaturbrennstoffzellen, wie man sie bei der Kombination einer Mikrogasturbine mit eingebetteten Hochtemperaturbrennstoffzellen vorfindet. Hierbei bildet die äußerste Schale (bei der zentralen Abgasführung zuzüglich der inneren der Achse zugewandten ringspaltförmigen Kanalwand) den Druckbehälter, welcher sich auf einem niedrigeren vorteilhaften Temperaturniveau (im Bereich der Umgebungsbedingung oder Abgastemperaturniveau) befindet.

### Bezugszeichenliste

- 1: Behältnis
- 2: Hochtemperaturbrennstoffzellen
- 2a: Kathode
- 2a: Anode

- 3: Schichten
- 3a: äußere Schicht
- 3b: innere Schicht
- 3c: dritte Schicht
- 3d: vierte Schicht
- 3e: druckstabile Schicht

- 4: Zwischenraum
- 4a: erster Zwischenraum
- 4b: zweiter Zwischenraum
- 4c: dritter Zwischenraum

- 5: Mittelvolumen
- 6: Wärmetausch-Rekuperator
- 7: Turbine
- 8: Verdichter
- 9: zweite Wärmetauscher
- 10: Dampfgenerator
- 11: Generator
- 12: Turbosatz

## Patentansprüche

1. Behältnis (1) zur Aufnahme und zum Betrieb von Hochtemperaturbrennstoffzellen (2), umfassend Hochtemperaturbrennstoffzellen (2) und mehrere übereinander angeordnete Schichten (3a, 3b, 3c, 3d), wobei eine äußere Schicht (3a) das Behältnis (1) nach außen hin begrenzt und im so ausgebildeten Innenraum des Behältnisses (1) weitere Schichten (3b, 3c, 3d) angeordnet sind,
wobei eine innere Schicht (3b), zur Aufnahme von Hochtemperaturbrennstoffzellen (2), zentral im Innenraum des Behältnisses (1) angeordnet ist und die im Behältnis (1) aufgenommenen Hochtemperaturbrennstoffzellen (2) vollständig umhüllt,
eine dritte Schicht (3c), welche über der inneren Schicht (3b) angeordnet ist und diese vollständig umhüllt,
mindestens eine vierte Schicht (3d), welche über der dritten Schicht (3c) angeordnet ist und diese vollständig umhüllt, und
die äußere Schicht (3a), welche über der mindestens vierten Schicht (3d) angeordnet ist und diese vollständig umhüllt,
wobei jeweils zwischen zwei übereinander angeordneten Schichten (3b-3c, 3c-3d, 3d-3a) ein durch Fluide durchdringbarer Zwischenraum (4a, 4b, 4c) ausgebildet ist.

2. Behältnis (1), gemäß Anspruch 1, **dadurch gekennzeichnet, dass** im Innenraum des Behältnisses (1) eine zusätzliche Schicht angeordnet ist, wobei diese Schicht eine druckstabile für Massenströme undurchlässige Schicht (3e) ist, welche die innere Schicht (3b) und/oder die äußere Schicht (3a) umhüllt oder auf diesen angeordnet ist.

3. Behältnis (1), gemäß Anspruch 1 oder 2, **dadurch gekennzeichnet, dass** die innere Schicht (3b) zumindest zweiteilig aufgebaut ist, wobei der Teil der Schicht, welcher den Hochtemperaturbrennstoffzellen (2) zugewandt ist, eine Latentwärmespeicherschicht ist.

4. Behältnis (1), gemäß einem der Ansprüche 1 bis 3, **dadurch gekennzeichnet, dass** das Behältnis (1) im Wesentlichen eine kugelartige, kubusartige oder vieleckartige Form aufweist, wobei optional das Behältnis (1) rotationssymmetrisch ist.

5. Behältnis (1), gemäß Anspruch 4, dass die Kugel, der Kubus oder das Vieleck gegebenenfalls entlang mindestens einer seiner Rotationsachse gestreckt und/oder verzerrt ist, wobei optional das Behältnis (1) rotationssymmetrisch ist.

6. Behältnis (1), gemäß einem der vorangehenden Ansprüche, **dadurch gekennzeichnet, dass** die innere Schicht (3b) eine torusartige Form aufweist und ein Mittelvolumen (5) ausbildet, welches konisch, zylindrisch oder hyperbolisch ausgebildet ist.

7. Behältnis (1), gemäß einem der vorangehenden Ansprüche, **dadurch gekennzeichnet, dass** die Hochtemperaturbrennstoffzellen (2) planar tubulär, monolithisch oder eine Kombination der planaren und tubulären Bauweise sind, wobei optional die Hochtemperaturbrennstoffzellen (2), welche planar sind, als Hochtemperaturbrennstoffzellenstapel ausgebildet sind.

8. Behältnis (1), gemäß einem der vorhergehenden Ansprüche, **dadurch gekennzeichnet, dass** die jeweiligen Schichten (3) aus hochwarmfesten metallischen Materialien, Metall, Legierungen, Stahl, Kunststoff, Keramik, Schaumstoff, deren Kombinationen oder Verbundwerkstoffen bestehen, wobei optional die jeweiligen Schichten (3) aus unterschiedlichen Materialien bestehen, welche unterschiedliche Wärmedurchgangswerte aufweisen.

9. Behältnis (1), gemäß einem der vorangehenden Ansprüche, **dadurch gekennzeichnet, dass** Fluide Betriebsmedien, Kühlmedien, Wärmemedien, Wärmespeichermedien oder Brennstoffe sind.

10. Behältnis (1), gemäß einem der vorangehenden Ansprüche, **dadurch gekennzeichnet, dass** das Behältnis (1) einen ersten Zwischenraum (4a) zwischen der inneren Schicht (3b) und der dritten Schicht (3c), einen zweiten Zwischenraum (4b) zwischen der dritten Schicht (3c) und vierten Schicht (3d) und einen dritten Zwischenraum (4c) zwischen der vierten Schicht (3d) und äußeren Schicht (3a) aufweist, wobei optional die jeweiligen Zwischenräume (4) von unterschiedlichen Fluiden durchdringbar sind.

11. Behältnis (1), gemäß einem der vorangehenden Ansprüche, **dadurch gekennzeichnet, dass** das Abgas vom Mittelvolumen (5) kommend im Wärmetausch-Rekuperator (6) Wärme abgibt.

12. Behältnis (1), gemäß einem der vorangehenden Ansprüche, **dadurch gekennzeichnet, dass** das Mittelvolumen (5) mit einem Ausgang einer Turbine (7) gekoppelt ist.

13. Behältnis (1), gemäß einem der vorangehenden Ansprüche, **dadurch gekennzeichnet, dass** zumindest ein Zwischenraum (4) mit einem Verdichter (8) gekoppelt ist.

14. Behältnis (1), gemäß einem der vorangehenden Ansprüche, **dadurch gekennzeichnet, dass** der erste Zwischenraum (4a) und der zweite Zwischenraum (4b) über einen Wärmetausch-Rekuperator (6) miteinander gekoppelt sind.

15. Behältnis (1), gemäß einem der vorangehenden Ansprüche, **dadurch gekennzeichnet, dass** zumindest ein Zwischenraum (4) und der Raum, in dem sich die Hochtemperaturbrennstoffzellen (2) befinden, über einen zweiten Wärmetauscher (9) miteinander gekoppelt sind.

16. Behältnis (1), gemäß einem der vorangehenden Ansprüche, **dadurch gekennzeichnet, dass** zumindest ein Zwischenraum (4) mit einem Dampfgenerator (10) gekoppelt sind.

## Claims

1. Container (1) for receiving and operating high-temperature fuel cells (2), comprising high-temperature fuel cells (2) and several layers (3a, 3b, 3c, 3d) arranged one above the other, whereby an outer layer (3a) delimits the container (1) to the outside and further layers (3b, 3c, 3d) are arranged in the interior of the container (1) formed in this way,
whereby an inner layer (3b) for receiving high-temperature fuel cells (2) is arranged centrally in the interior of the container (1) and completely envelops the high-temperature fuel cells (2) received in the container (1),
a third layer (3c), which is arranged above the inner layer (3b) and completely envelops the latter,
at least one fourth layer (3d), which is arranged above the third layer (3c) and completely envelops the latter, and
the outer layer (3a), which is arranged above the at least fourth layer (3d) and completely envelops the latter,
whereby a fluid-permeable intermediate space (4a, 4b, 4c) is formed respectively between two superimposed layers (3b-3c, 3c-3d, 3d-3a).

2. Container (1) according to claim 1, **characterized in that** an additional layer is arranged in the interior of the container (1), whereby this layer is a pressure-stable layer (3e), which is impermeable to mass flows, which envelops or is arranged on the inner layer (3b) and/or the outer layer (3a).

3. Container (1) according to claim 1 or 2, **characterized in that** the inner layer (3b) is constructed in at least two parts, the part of the layer facing the high-temperature fuel cells (2) being a latent heat storage layer.

4. Container (1) according to any one of claims 1 to 3, **characterized in that** the container (1) has a substantially spherical, cubic or polygonal shape, the container (1) optionally being rotationally symmetrical.

5. Container (1) according to claim 4, that the sphere, the cube or the polygon is optionally stretched and/or distorted along at least one of its axes of rotation, wherein the container (1) is optionally rotationally symmetrical.

6. Container (1) according to one of the preceding claims, **characterized in that** the inner layer (3b) has a toroidal shape and forms a central volume (5) which is designed conically, cylindrically or hyperbolically.

7. Container (1) according to one of the preceding claims, **characterized in that** the high-temperature fuel cells (2) are planar, tubular, monolithic or a combination of the planar and tubular construction, whereby optionally the high-temperature fuel cells (2), which are planar, are formed as high-temperature fuel cell stacks.

8. Container (1) according to one of the preceding claims, **characterized in that** the respective layers (3) are made of high temperature resistant metallic materials, metal, alloys, steel, plastic, ceramics, foamed material, combinations thereof or composite materials, whereby the respective layers (3) optionally consist of different materials which have different heat transfer values.

9. Container (1) according to one of the preceding claims, **characterized in that** the fluids are operating media, cooling media, heating media, heat storage media or fuels.

10. Container (1) according to one of the preceding claims, **characterized in that** the container (1) has a first intermediate space (4a) between the inner layer (3b) and the third layer (3c), a second intermediate space (4b) between the third layer (3c) and the fourth layer (3d) and a third intermediate space (4c) between the fourth layer (3d) and the outer layer (3a), whereby the respective intermediate spaces (4) can optionally be penetrable by different fluids.

11. Container (1) according to one of the preceding claims, **characterized in that** the exhaust gas coming from the central volume (5) releases heat in the heat exchange recuperator (6).

12. Container (1) according to one of the preceding claims, **characterized in that** the central volume (5) is coupled to an outlet of a turbine (7).

13. Container (1) according to one of the preceding claims, **characterized in that** at least one intermediate space (4) is coupled to a compressor (8).

14. Container (1) according to one of the preceding claims, **characterized in that** the first intermediate space (4a) and the second intermediate space (4b) are coupled to one another via a heat exchange recuperator (6).

15. Container (1) according to one of the preceding claims, **characterized in that** at least one intermediate space (4) and the space in which the high-temperature fuel cells (2) are located are coupled to one another via a second heat exchanger (9).

16. Container (1) according to one of the preceding claims, **characterized in that** at least one intermediate space (4) is coupled to a steam generator (10).

## Revendications

1. Récipient (1) destiné à recevoir et à faire fonctionner des piles à combustible (2) à haute température, comprenant des piles à combustible (2) à haute température et plusieurs couches (3a, 3b, 3c, 3d) agencées les unes au-dessus des autres, une couche extérieure (3a) délimitant le récipient (1) vers l'extérieur et d'autres couches (3b, 3c, 3d) étant agencées dans l'espace intérieur du récipient (1) ainsi formé,
une couche intérieure (3b), destinée à recevoir des piles à combustible (2) à haute température, étant agencée au centre de l'espace intérieur du récipient (1) et enveloppant complètement les piles à combustible (2) à haute température reçues dans le récipient (1),
une troisième couche (3c), qui est agencée au-dessus de la couche intérieure (3b) et qui la recouvre entièrement,
au moins une quatrième couche (3d) qui est agencée au-dessus de la troisième couche (3c) et qui la recouvre entièrement, et
la couche extérieure (3a), qui est agencée au-dessus de ladite au moins quatrième couche (3d) et la recouvre entièrement,
un espace intermédiaire (4a, 4b, 4c) apte à être traversé par des fluides étant respectivement formé entre deux couches (3b-3c, 3c-3d, 3d-3a) agencées l'une au-dessus de l'autre.

2. Récipient (1), selon la revendication 1, **caractérisé en ce qu'**une couche supplémentaire est agencée dans l'espace intérieur du récipient (1), cette couche étant une couche (3e) résistante à la pression et imperméable aux flux de masse, qui enveloppe la couche intérieure (3b) et/ou la couche extérieure (3a) ou est agencée sur celles-ci.

3. Récipient (1) selon la revendication 1 ou la revendication 2, **caractérisé en ce que** la couche intérieure (3b) est constituée d'au moins deux parties, la partie de la couche qui est tournée vers les piles à combustible (2) à haute température étant une couche d'accumulation de chaleur latente.

4. Récipient (1) selon l'une des revendications 1 à 3, **caractérisé en ce que** le récipient (1) présente essentiellement une forme sphérique, cubique ou polygonale, le récipient (1) étant optionnellement à symétrie de révolution.

5. Récipient (1) selon la revendication 4, **caractérisé en ce que** la sphère, le cube ou le polygone est optionnellement étiré et/ou déformé le long d'au moins un de ses axes de rotation, le récipient (1) étant optionnellement à symétrie de révolution.

6. Récipient (1) selon l'une des revendications précédentes, **caractérisé en ce que** la couche intérieure (3b) présente une forme torique et forme un volume central (5) qui est conique, cylindrique ou hyperbolique.

7. Récipient (1) selon l'une des revendications précédentes, **caractérisé en ce que** les piles à combustible (2) à haute température sont tubulaires planes, monolithiques ou une combinaison de la construction plane et tubulaire, les piles à combustible (2) à haute température qui sont planes étant optionnellement sous la forme d'un empilement de piles à combustible à haute température.

8. Récipient (1), selon l'une des revendications précédentes, **caractérisé en ce que** les couches respectives (3) sont constituées de matériaux métalliques résistant aux hautes températures, de métal, d'alliages, d'acier, de plastique, de céramique, de mousse, de leurs combinaisons ou de matériaux composites, les couches respectives (3) étant optionnellement constituées de matériaux différents qui présentent des valeurs de transmission thermique différentes.

9. Récipient (1) selon l'une des revendications précédentes, **caractérisé en ce que** les fluides sont des fluides de service, des fluides de refroidissement, des fluides thermiques, des fluides de stockage de chaleur ou des combustibles.

10. Récipient (1) selon l'une des revendications précédentes, **caractérisé en ce que** le récipient (1) présente un premier espace intermédiaire (4a) entre la couche intérieure (3b) et la troisième couche (3c), un deuxième espace intermédiaire (4b) entre la troisième couche (3c) et la quatrième couche (3d) et un troisième espace intermédiaire (4c) entre la quatrième couche (3d) et la couche extérieure (3a), les espaces intermédiaires respectifs (4) étant optionnellement aptes à être traversés par des fluides différents.

11. Récipient (1), selon l'une des revendications précédentes, **caractérisé en ce que** le gaz d'échappement provenant du volume central (5) cède de la chaleur dans le récupérateur d'échange de chaleur (6).

12. Réservoir (1) selon l'une des revendications précédentes, **caractérisé en ce que** le volume central (5) est relié à une sortie d'une turbine (7).

13. Récipient (1), selon l'une des revendications précédentes, **caractérisé en ce qu'**au moins un espace intermédiaire (4) est relié à un compresseur (3).

14. Récipient (1) selon l'une des revendications précédentes, **caractérisé en ce que** le premier espace intermédiaire (4a) et le deuxième espace intermédiaire (4b) sont reliés entre eux par l'intermédiaire d'un récupérateur d'échange de chaleur (6).

15. Récipient (1) selon l'une des revendications précédentes, **caractérisé en ce qu'**au moins un espace intermédiaire (4) et l'espace dans lequel se trouvent les piles à combustible (2) à haute température sont reliés l'un à l'autre par un deuxième échangeur de chaleur (9).

16. Récipient (1) selon l'une des revendications précédentes, **caractérisé en ce qu'**au moins un espace intermédiaire (4) est relié à un générateur de vapeur (10).
